Europäisches Patentamt

European Patent Office

Office européen des brevets

(11) Publication number: **0 429 410 A2**

(12) # EUROPEAN PATENT APPLICATION

(21) Application number: **90830516.2**

(22) Date of filing: **13.11.90**

(51) Int. Cl.5: **B29C 67/22**, B29C 45/16, B44F 9/12

(30) Priority: **22.11.89 IT 6803589**

(43) Date of publication of application:
**29.05.91 Bulletin 91/22**

(84) Designated Contracting States:
**AT BE CH DE DK ES FR GB GR IT LI LU NL SE**

(71) Applicant: **GALLINO COMPONENTI PLASTICI S.p.A.**
**Via Einaudi, 154**
**I-10040 Rivalta (Torino)(IT)**

(72) Inventor: **Malvassora, Giovanni**
**Via Divisione Partigiani Italiani Garibaldi 21**
**I-14100 Asti(IT)**

(74) Representative: **Notaro, Giancarlo et al**
**c/o Jacobacci-Casetta & Perani S.p.A. Via Alfieri, 17**
**I-10121 Torino(IT)**

(54) **A method for the manufacture, by the moulding of plastics material, of a motor-vehicle steering wheel which looks like a steering wheel covered with natural leather, and a steering wheel produced by the method.**

(57) A motor-vehicle steering wheel is produced by the moulding of plastics material in two steps. In a first step, a polyurethane foam body (6) is moulded around a metal core (5), the body corresponding in shape to the final shape desired but being thinner than the final thickness desired. In a second step, a covering (12) of plastics material is moulded on the polyurethane foam body (6) so as to bring the part to the final thickness desired. The foam used in the first step is produced without the use of chlorofluorocarbons as expanding agents.

FIG. 4

EP 0 429 410 A2

# A METHOD FOR THE MANUFACTURE, BY THE MOULDING OF PLASTICS MATERIAL, OF A MOTOR-VEHICLE STEERING WHEEL WHICH LOOKS LIKE A STEERING WHEEL COVERED WITH NATURAL LEATHER, AND A STEERING WHEEL PRODUCED BY THE METHOD

The present invention relates to motor-vehicle steering wheels which are made of plastics material and look like steering wheels covered with natural leather.

According to a conventional technique in this field, the steering wheel is produced by the moulding of a polyurethane foam around the entire metal core of the steering wheel or at least around the part of the core which constitutes the rim of the wheel. The plastics material is expanded in the forming die with the use of an expanding agent which usually belongs to chlorofluorocarbon family. The use of expanding agents of this kind has the advantage that the surface region of the moulded part is denser, giving this region the appearance and consistency of natural leather. For this reason, experts in the art define steering wheels of this type as polyurethane foam steering wheels with "integral" skins. The part of the plastics foam which is furthest from the outer surface of the part is less dense and performs the function of padding.

The use of chlorofluorocarbons as expanding agents has recently been discouraged, however, and the possibility cannot be excluded that it will be soon forbidden by law since these compounds are held responsible for the reduction of the ozone in the ionosphere.

On the other hand, the replacement of the chlorofluorocarbons with other expanding agents, such as, for example, carbon dioxide, does not provide the increased density of the surface region of the moulded part which gives that region the appearance of leather.

The object of the present invention is to produce a steering wheel of plastics material without the use of chlorofluorocarbons as expanding agents but nevertheless to provide a part which faithfully reproduces the appearance and/or feel of a steering wheel covered in natural leather.

In order to achieve this object, the subject of the invention is a method for the manufacture, by the moulding of plastics material, of a motor-vehicle steering wheel, or a part thereof, which looks like a steering wheel covered with leather, characterised in that it comprises the following steps:
a first step in which a polyurethane foam is moulded around a metal core, and
a second step in which a covering of plastics material is moulded around the part produced as a result of the first moulding step.

The part produced by the first moulding step has a geometrical shape similar to the final shape desired but is thinner than the final thickness desired. The foam can be expanded in the first moulding step with the use of expanding agents other than chlorofluorocarbons, for example, with carbon dioxide, since it is not necessary to produce a denser surface region in the first moulding step. The body produced at the end of this step in fact only has to perform the function of padding. The surface skin of the steering wheel, however, is constituted by the covering which is produced by the second moulding step. This covering may be constituted by a plastics material which is not expanded or which is only slightly expanded, though still with the use of expanding agents other than chlorofluorocarbons.

In addition to the advantage that it avoids the use of chloro-fluoro derivatives as expanding agents, the method according to the invention produces an outer surface with good aesthetic and mechanical characteristics. Moreover, it affords the advantage that the steering wheel produced at the end of the process is lighter than a steering wheel produced by the conventional method. Finally, there is also the advantage that aliphatic isocyanates which are not yellowed by light can be used in the outer covering without thereby penalising the cost of the polyurethane foam constituting the padding.

Further characteristics and advantages of the present invention will become clear from the description which follows with reference to the appended drawings, provided purely by way of non-limiting example, in which:
Figures 1 and 2 show schematically and in section the first moulding step of the method according to the invention, and
Figures 3 and 4 show schematically and in section the second step of the method according to the invention.

For simplicity of explanation, the embodiment of the method according the invention described below relates to the case in which a covering of plastics material is to be formed on the metal core of a steering wheel only in correspondence with the rim of the wheel. It is clear, however, that the method according to the invention can also be used for covering the entire body of the steering wheel.

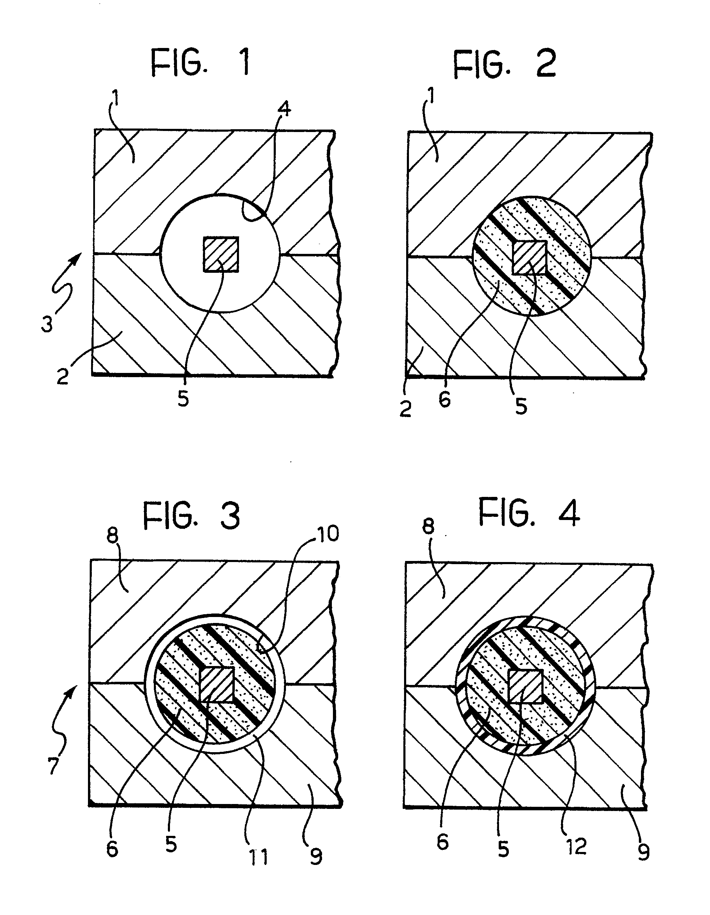

Figure 1 shows a peripheral portion of an upper die 1 and a lower die 2 forming parts of a moulding tool 3. The two dies 1, 2 are shown in the coupled condition in which they define a toroidal moulding cavity 4 in which the metal core 5 of the rim of a motor-vehicle steering wheel is positioned and supported (by support means of any known type, not shown in the drawings). The shape of the moulding cavity 4 corresponds to that of the rim to be produced. The diameter of the local circular cross-section of the cavity, however, is slightly smaller (for example, by approximately 4 mm) than the final diameter of the part to be produced.

In the first step of the method according to the invention, a semirigid polyurethane foam 6 is moulded in the moulding cavity 4 around the metal core 5. The expanding agent used to expand the foam is an agent which does not belong to the chlorofluorocarbon family. According to a preferred embodiment, this agent is carbon dioxide produced by the reaction of a di-isocyanate (for example, diphenylmethane-4,4'-di-isocyanate or its derivatives) with water in the mixture which is injected into the moulding cavity 4 (through a duct not visible in the drawings).

The body thus obtained at the end of the first moulding step described above does not have denser regions at its outer surface and in the part immediately adjacent the metal core, as would be the case with the use of chloro-fluoro derivatives as expanding agents. The density of the foam 6 produced by the first moulding step may be within a very wide range (for example, between 0.2 and 0.9 grams/cm$^3$).

The body constituted by the foam 6 with the metal core 5 incorporated therein is then placed in a moulding tool 7 (Figure 3) comprising an upper die 8 and a lower die 9 which define a toroidal moulding cavity 10 whose shape and size correspond exactly to those of the final part to be produced. The body 6 is positioned and supported in the cavity 10 (by support means of any known type, not visible in the drawings) so as to leave a substantially uniform space 11 free around the entire outer surface of the body 6. A covering of relatively high density (for example, about 1.0 g/cm$^3$) is moulded in the space 11 so as to produce a fairly compact skin which provides the steering wheel with aesthetic and abrasion-resistance characteristics. A two-part polyurethane system is preferably used for the second moulding step. The outer covering thus produced is substantially non-expanded or very slightly expanded, though still with the use, as the expanding agent, of carbon dioxide or air suitably incorporated in the mixture.

At the end of the second moulding step, the covering produced (indicated 12 in Figure 4) is intimately connected and bonded to the body 6.

An alternative solution provides for the injection moulding of thermoplastic resins with elastomeric characteristics (thermoplastic rubbers or the like) to form the covering 12.

At the end of the first moulding step and before the moulding of the covering 12, the body 6 is preferably treated with solvent vapours or subjected to a light surface abrasion by the projection of abrasive material onto its entire surface in order to improve the adhesion of the subsequently moulded covering 12.

According to a further preferred characteristic, the surfaces of the two dies 8, 9 which define the cavity 10 have irregularities (projections, incisions, ribs or the like) which create an appearance similar to that of natural leather and/or reproduce the appearance of sewing or other decoration on the outer surface of the part finally produced.

As already indicated above, the method according to the invention produces a plastics steering wheel which has an appearance and feel similar to a steering wheel covered with natural leather and also has the desired strength characteristics, particularly abrasion resistance, whilst at the same time avoiding the use of chloro-fluoro derivatives as expanding agents. The outer surface produced has good aesthetic and mechanical characteristics. Moreover, the steering wheel is lighter than an equivalent steering wheel produced by the conventional method. Finally, the fact that the moulding is carried out in two successive steps enables aliphatic isocyanates, which prevent yellowing as a result of exposure to ultraviolet light, to be used only for the outer covering which is produced in the second moulding step, when this is formed by a two-part polyurethane, without at the same time penalising the cost of the foam constituting the padding of the steering wheel.

Naturally, the principle of the invention remaining the same, the details of construction and forms of embodiment may be varied widely with respect to those described and illustrated purely by way of example, without thereby departing from the scope of the present invention.

Clearly, for example, the polyurethane foam 6 need not even be of the semirigid type.

## Claims

1. A method for the manufacture, by the moulding of plastics material, of a motor-vehicle steering wheel, or a part thereof, which looks like a steering wheel covered with natural leather, characterised in that it comprises the following steps:
a first step in which a polyurethane foam (6) is moulded around a metal core (5), and
a second step in which a covering (12) of plastics material is moulded around the body (6) produced as a result of the first moulding step.

2. A method according to Claim 1, characterised in that the foam produced in the first moulding step is expanded with the use, as the expanding agent, of carbon dioxide produced by the reaction of a diisocyanate with water.

3. A method according to Claim 1, characterised in that a two-part polyurethane system is used for the moulding in the second step.

4. A method according to Claim 1, characterised in that a thermoplastic resin with elastomeric characteristics is injection moulded in the second step.

5. A method according to Claim 1, characterised in that, at the end of the first moulding step, the body produced is treated with solvent vapour or is subjected to light surface abrasion by the projection of abrasive material onto its entire surface, in order to improve the adhesion of the plastics covering moulded in the second step.

6. A method according to Claim 1, characterised in that, for the second moulding step, a die is used in which the moulding cavity is defined by a surface having irregularities which are intended to give rise to decorative effects reproducing the appearance of natural leather on the final moulded parts.

7. A motor-vehicle steering wheel, characterised in that it is produced by the method according to one or more of the preceding claims.

# FIG. 1

# FIG. 2

# FIG. 3

# FIG. 4